# EUROPÄISCHE PATENTSCHRIFT

(11) **EP 3 308 920 B1**
(45) Veröffentlichungstag und Bekanntmachung des Hinweises auf die Patenterteilung: **20.11.2019**
(21) Anmeldenummer: 17001089.6
(22) Anmeldetag: 27.06.2017
(51) Int. Cl.: B29B 9/06, B29C 48/00, B29C 48/25, B29C 48/345, B29K 23/00, B01J 2/20

(54) **VORRICHTUNG ZUM GRANULIEREN VON KUNSTSTOFFEN**
DEVICE FOR GRANULATING OF POLYMERS
DISPOSITIF DE GRANULATION DE POLYMÈRES

(30) Priorität: 17.10.2016 DE 202016006419 U
(43) Veröffentlichungstag der Anmeldung: 18.04.2018
(73) Patentinhaber: Maag Automatik GmbH, 63762 Großostheim (DE)
(72) Erfinder: Veltel, Jürgen, D-47626 Kevelaer (DE); Berrendorf, Matthias, D-46509 Xanten (DE)
(74) Vertreter: Spranger, Stephan

(56) Entgegenhaltungen:
- EP-A2- 0 531 966
- DE-A1- 10 151 434
- DE-A1- 10 234 229
- DE-A1- 19 920 601
- DE-A1-102008 037 011
- DE-T2- 69 414 317
- US-A- 5 723 082

## Beschreibung

Die vorliegende Erfindung betrifft eine Granulieranlage. Zur Herstellung von Granulat aus thermoplastischem Kunststoffmaterial, insbesondere Polymeren wie z. B. Polyethylen oder Polypropylen, werden häufig Unterwassergranulieranlagen eingesetzt, in denen zunächst Stränge aus dem thermoplastischen Kunststoffmaterial geformt werden, welche dann durch Granulatoren zu Granulat zerkleinert werden. Entsprechende Anlagen sind beispielsweise als Unterwassergranuliersystem Sphero der Automatik Plastics Machinery bekannt.

Hierbei kommen meist Extrusionssysteme, wie etwa Schneckenextruder, zum Einsatz, mit deren Hilfe ein nachgeschalteter Granulator kontinuierlich und gleichförmig mit Kunststoffschmelze versorgt wird. Zwischen dem Extrusionssystem und dem Granulator können, je nach Erfordernis, auch weitere Komponenten wie eine Zahnradpumpe, ein Schmelzefilter und/oder ein Anfahrventil angeordnet sein.

Der Granulator selbst kann nach bekannter Art aus einer Lochplatteneinheit, einer Prozesskammer und einer Messerkopfeinheit gebildet sein, und insbesondere als Unterwassergranulator oder als Trockenheißabschlaggranulator ausgeführt sein.

Zur Wartung und Reinigung der verschiedenen Komponenten, wie beispielsweise bei einem Materialwechsel, besteht dabei regelmäßig das Bedürfnis, die Komponenten voneinander zu trennen und zu entkoppeln, und nach der Reinigung diese wieder miteinander zu koppeln. Insbesondere ist es häufig notwendig, den Messerkopf und die Lochplatte des Granulators voneinander zu entkoppeln und zu trennen, um beispielsweise die Messer des Messerkopfs auswechseln zu können. Um dieses Trennen auf einfache Weise bewerkstelligen zu können, ist es bekannt, den Messerkopf und die Lochplatteneinheit des Granulators jeweils an einer Tragschiene verschiebbar aufzuhängen, indem beispielsweise jeweils eine Aufhängeinrichtung mit einer Rollenanordnung vorgesehen ist, die auf einer an der Tragschiene ausgebildeten Lauffläche läuft und in einer Längsrichtung der Tragschiene verstellt werden kann.

In einigen Anwendungen besteht darüber hinaus auch die Notwendigkeit, den Granulator, sowie gegebenenfalls die vorgeschalteten Komponenten wie Anfahrventil, Schmelzepumpe und/oder Schmelzeventil, von einem ersten Extrusionssystem zu trennen und diese mit einem zweiten Extrusionssystem zu koppeln, das seitlich des ersten Extrusionssystems angeordnet ist. Dies mag insbesondere in solchen Anwendungen notwendig sein, in denen unterschiedliche thermoplastische Kunststoffmaterialien verarbeitet und granuliert werden sollen. In diesem Fall ist allein eine Möglichkeit, den Granulator in Längsrichtung entlang der Tragschiene zu verstellen nicht ausreichend, um einen erforderlichen seitlichen Versatz einstellen zu können. Verschiedentlich wurde daher vorgesehen, die Tragschiene an einem drei- oder vierbeinigen Portal anzubringen, dessen Portalbeine Rollen aufweisen, so dass beispielsweise ein Bediener das Portal, und damit die Position der Tragschiene, verschieben kann. Dies ist beispielsweise ebenso für das Unterwassergranuliersystem Sphero der Automatik Plastics Machinery bekannt.

Eine derartige Portalbauweise hat jedoch den Nachteil, dass die Portalbeine störend beim Zugang zur Anlage sein können, sowie den relativ hohen Materialaufwand, der zur Konstruktion des Portals erforderlich ist.

Die deutsche Offenlegungsschrift DE 102 34 229 A1 offenbart eine Granuliervorrichtung, bei welcher über eine verschwenkbare Halteeinrichtung ein Unterwassergranulator von einem Extruder mit angrenzender Siebeirichtung wegschwenkbar ist.

Die deutsche Offenlegungsschrift DE 199 20 601 A1 beschreibt eine Schnellwechseleinrichtung an einem Extruder, mittels welcher an einem Anschlussflansch angelenkte Bearbeitungseinrichtungen zu- und abschwenkbar sind.

Es ist daher die Aufgabe der vorliegenden Erfindung, eine Granulieranlage vorzuschlagen, mit der auf konstruktiv einfache Weise eine Verstellbarkeit des Granulators sowohl in Längsrichtung als auch in seitlicher Richtung ermöglicht wird.

Diese Aufgabe wird mit einer Granulieranlage gemäss Anspruch 1 gelöst. Bevorzugte Ausführungsformen sind in den abhängigen Ansprüchen dargelegt.

Erfindungsgemäss weist die Granulieranlage eine Tragschiene, einen Granulator, welcher an der Tragschiene hängend angeordnet ist, eine Aufhängungsbasis, einen Tragarm, welcher an einem ersten Ende mittels einem ersten Schwenkgelenk an der Aufhängungsbasis gelagert ist und an einem zweiten Ende mittels einem zweiten Schwenkgelenk gelenkig mit der Tragschiene verbunden ist, und einen Gelenkarm mit einem ersten Gelenkarm, der über ein drittes Schwenkgelenk mit einem zweiten Gelenkarm verbunden ist, wobei der erste Gelenkarm mittels einem vierten Schwenkgelenk an der Aufhängungsbasis gelagert ist, und der zweite Gelenkarm mittels einem fünften Schwenkgelenk gelenkig mit der Tragschiene verbunden ist, auf, wobei das erste bis fünfte Schwenkgelenk jeweils eine im Wesentlichen vertikale Schwenkachse aufweisen.

Durch unterschiedliches Verschwenken des Tragarms und des Gelenkarms, bzw. dessen Gabelgliedern, ist es so möglich, die Tragschiene in einer im Wesentlichen horizontalen Ebene in seitlicher und in Längsrichtung zu verstellen, sowie um einen Winkel zu drehen. Auf diese Weise kann beispielsweise ein Granulator auf einfache Weise zwischen einer Position zur Ankopplung an ein erstes Extrusionssystem und einer Position zur Ankopplung an ein zweites Extrusionssystem verstellt werden. Diese Verstellbarkeit kann insbesondere vorteilhaft mit einer Verstellbarkeit des Granulators in Längsrichtung zur Tragschiene kombiniert werden.

Es kann dabei vorgesehen sein, dass der Tragarm und der Gelenkarm an zwei verschiedenen Punkten an der Aufhängungsbasis angelenkt sind. Alternativ ist es ebenso möglich, dass der Tragarm und der Gelenkarm so an der Aufhängungsbasis angelenkt sind, dass diese um eine gleiche Schwenkachse verschwenkt werden.

Die Aufhängungsbasis kann beispielsweise von einem dedizierten konstruktiven Element gebildet werden, wie beispielsweise eine Tragesäule. Bevorzugt wird die Aufhängungsbasis jedoch an einer anderen Komponente der Granulieranlage befestigt oder einstückig mit dieser ausgebildet, wie beispielsweise einem Schaltschrank oder einem Gehäuse eines Nebenaggregats. Auf diese Weise kann eine besonders raum- und materialsparende Konstruktion ermöglicht werden.

Der Granulator kann insbesondere als ein Unterwassergranulator oder ein Trockenheißabschlaggranulator ausgeführt sein, und kann insbesondere eine Lochplatteneinheit und eine Messerkopfeinheit umfassen, welche bevorzugt lösbar gekoppelt und separat an der Tragschiene aufgehängt sind.

Die Erfindung wird nachfolgend in größerem Detail beschrieben, mit Bezug auf die Zeichnungen:
- Fig. 1 bis 3: zeigen schematisch eine Granulieranlage in einer Seitenansicht, Draufsicht und Vorderansicht;
- Fig. 4: zeigt schematisch eine Vorderansicht eines Ausführungsbeispiels, in der ein Tragarm und ein Gelenkarm so an einer Aufhängungsbasis angelenkt sind, dass sich diese um eine gleiche Schwenkachse drehen.

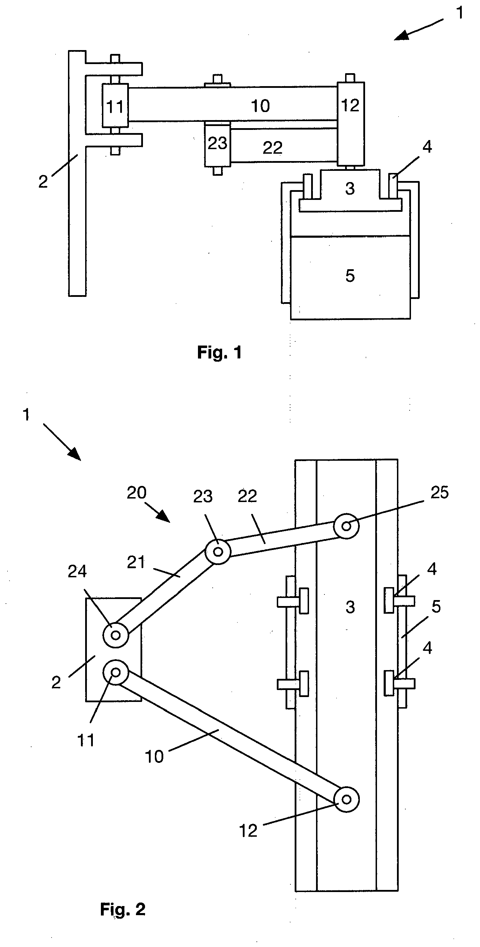

In den Fig. 1 bis 3 ist schematisch eine Granulieranlage 1 dargestellt, in der ein Granulator 5 hängend an einer Tragschiene 3 angeordnet ist, beispielsweise mittels Rollen 4, so dass der Granulator 3 in Längsrichtung der Tragschiene verstellt werden kann.

Die Tragschiene 3 wiederum ist über einen Tragarm 10 und einen Gelenkarm 20 an einer Aufhängungsbasis 2 befestigt. Genauer ist der Tragarm 10 an einem ersten Ende mittels einem ersten Schwenkgelenk 11 an der Aufhängungsbasis 2 gelagert und an einem zweiten Ende mittels einem zweiten Schwenkgelenk 12 gelenkig mit der Tragschiene 3 verbunden. Der Gelenkarm 20 ist aus einer ersten Gelenkarmgabel 21, die über ein drittes Schwenkgelenk 2 mit einer zweiten Gelenkarmgabel 22 verbunden ist gebildet. Die erste Gelenkarmgabel 21 ist mittels einem vierten Schwenkgelenk 24 an der Aufhängungsbasis 2 gelagert, und die zweite Gelenkarmgabel 22 ist mittels einem fünften Schwenkgelenk 25 gelenkig mit der Tragschiene 3 verbunden. Der Tragarm 10 und die Gelenkarmgabeln 21, 22 des Gelenkarms 20 können daher in einer im Wesentlichen horizontalen Ebene relativ zueinander verschwenkt werden, mit dem Ergebnis, dass die Tragschiene in der horizontalen Ebene versetzt werden kann, zum Beispiel näher in Richtung zur Aufhängungsbasis 2 und von dieser entfernt bewegt werden kann.

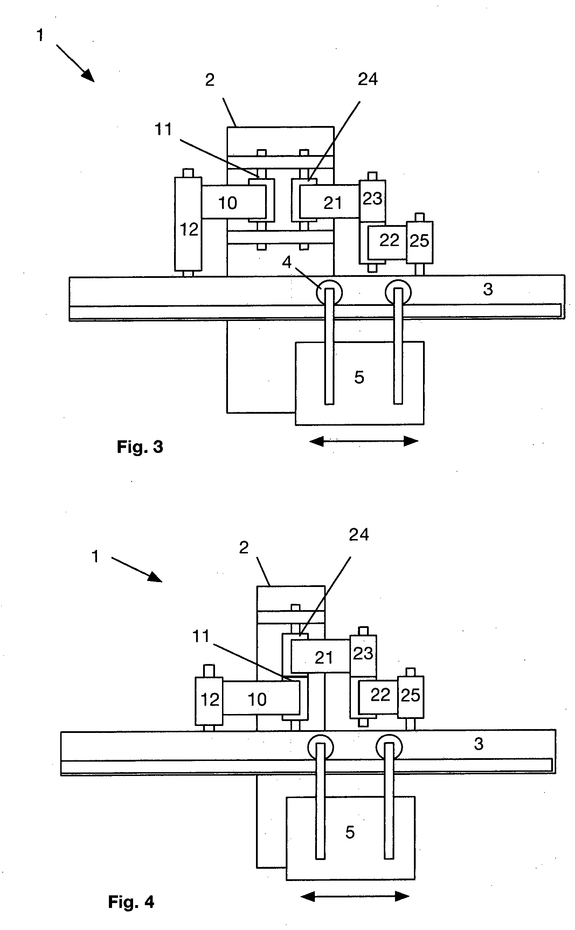

Die Fig. 1 bis 3 zeigen dabei ein Ausführungsbeispiel, in dem der Tragarm 10 und der Gelenkarm 20 an getrennten, seitlich zueinander versetzten Schwenkgelenken 11, 24 angeordnet sind. Alternativ ist es jedoch auch möglich, wie in Fig. 4 gezeigt, die Schwenkgelenke 11, 24 so auszuführen, dass diese eine gemeinsame, gleiche Schwenkachse aufweisen.

### Bezugszeichen

- 1: Granulieranlage
- 2: Aufhängungsbasis
- 3: Tragschiene
- 4: Rollen
- 5: Granulator
- 10: Tragarm
- 20: Gelenkarm
- 21: erste Gelenkarmgabel
- 22: zweite Gelenkarmgabel
- 11, 12, 23, 24, 25: Schwenkgelenke

## Patentansprüche

1. Granulieranlage, umfassend
eine Tragschiene (3);
einen Granulator (5), welcher an der Tragschiene (3) hängend angeordnet ist;
eine Aufhängungsbasis (2);
einen Tragarm (10), welcher an einem ersten Ende mittels einem ersten Schwenkgelenk (11) an der Aufhängungsbasis (2) gelagert ist und an einem zweiten Ende mittels einem zweiten Schwenkgelenk (12) gelenkig mit der Tragschiene (3) verbunden ist;
**dadurch gekennzeichnet, dass** die Granulieranlage weiter umfasst:
einen Gelenkarm (20) mit einer ersten Gelenkarmgabel (21), die über ein drittes Schwenkgelenk (23) mit einer zweiten Gelenkarmgabel (22) verbunden ist, wobei die erste Gelenkarmgabel (21) mittels einem vierten Schwenkgelenk (24) an der Aufhängungsbasis (2) gelagert ist, und die zweite Gelenkarmgabel (22) mittels einem fünften Schwenkgelenk (25) gelenkig mit der Tragschiene (3) verbunden ist,
wobei das erste bis fünfte Schwenkgelenk (11, 12, 23, 24, 25) jeweils eine im Wesentlichen vertikale Schwenkachse aufweisen.

2. Granulieranlage nach Anspruch 1, wobei das erste Schwenkgelenk (11) und das vierte Schwenkgelenk (24) eine gleiche Schwenkachse aufweisen.

3. Granulieranlage nach einem der vorstehenden Ansprüche, wobei der Granulator (5) in einer Längsrichtung der Tragschiene (3) verstellbar angeordnet ist.

4. Granulieranlage nach einem der vorstehenden Ansprüche, wobei die Aufhängungsbasis (2) an einem Gehäuse, insbesondere einem Schaltschankgehäuse oder einem Nebenaggregategehäuse, der Granulieranlage befestigt oder mit diesem einstückig ausgebildet ist.

5. Granulieranlage nach einem der vorstehenden Ansprüche, wobei der Granulator (5) als ein Unterwassergranulator oder ein Trockenheißabschlaggranulator ausgebildet ist.

6. Granulieranlage nach einem der vorstehenden Ansprüche, wobei der Granulator (5) eine Lochplatteneinheit und eine Messerkopfeinheit umfasst, welche lösbar gekoppelt und separat an der Tragschiene (3) aufgehängt sind.

7. Granulieranlage nach einem der vorstehenden Ansprüche, weiter umfassend zumindest ein Extrusionssystem.

## Claims

1. Pelletising plant, comprising
- a mounting rail (3);
a pelletiser (5), which is suspended from the mounting rail (3);
a suspension base (2);
a suspension arm (10), which is mounted to the suspension base (2) via a first swivel joint (11) on the one end and flexibly attached by a second swivel joint (12) to the mounting rail (3) on the other end;
**characterised in that** the pelletising plant furthermore comprises:
an articulated arm (20) with a first fork (21) which is connected to a second fork (22) via a third swivel joint (23), wherein the first fork (21) is also mounted to the suspension base (2) via a fourth swivel joint (24), and the second fork (22) is flexibly attached to the mounting rail (3) via a fifth swivel joint (25),
wherein the first through fifth swivel joints (11, 12, 23, 24, 25) each have a substantially vertical swivel axis.

2. Pelletising plant according to claim 1, wherein the first swivel joint (11) and the fourth swivel joint (24) have identical swivel axes.

3. Pelletising plant according to one of the previous claims, wherein the granulator (5) can be adjusted lengthwise along the mounting rail (3).

4. Pelletising plant according to one of the previous claims, wherein the suspension base (2) is attached to a granulation plant housing, particularly a switch cabinet housing or an ancillary component housing, or is an integrated part of said housing.

5. Pelletising plant according to one of the previous claims, wherein the pelletiser (5) is contrived as a submerged pelletiser or a dry hot die plate pelletiser.

6. Pelletising plant according to one of the previous claims, wherein the pelletiser (5) comprises a die plate unit and a cutter head unit, which are detachably coupled and separately suspended from the mounting rail (3).

7. Pelletising plant according to one of the previous claims, furthermore comprising at least one extrusion system.

## Revendications

1. Installation de granulation comprenant
un rail porteur (3) ;
un granulateur (5), disposé de manière à être suspendu au rail porteur (3) ;
une base de suspension (2) ;
un bras porteur (10) monté au niveau d'une première extrémité au moyen d'une première articulation de traînée (11) à la base de suspension (2) et relié de manière articulée au niveau d'une deuxième extrémité au rail porteur (3) par une deuxième articulation de traînée (12) ;
**caractérisée en ce que** l'installation de granulation comprend également :
un bras articulé (20) doté d'une première fourche (21) reliée à une deuxième fourche (22) par une troisième articulation de traînée (23), ladite première fourche (21) étant montée à la base de suspension (2) au moyen d'une quatrième articulation de traînée (24) et ladite deuxième fourche (22) étant reliée de manière articulée au rail porteur (3) au moyen d'une cinquième articulation de traînée (25),
les cinq articulations de traînée (11, 12, 23, 24, 25) présentant chacune un axe de pivotement sensiblement vertical.

2. Installation de granulation conforme à la revendication 1, la première articulation de traînée (11) et la quatrième articulation de traînée (24) présentant un axe de pivotement identique.

3. Installation de granulation conforme à l'une des revendications ci-dessus, le granulateur (5) étant disposé de manière réglable dans le sens longitudinal du rail porteur (3).

4. Installation de granulation conforme à l'une des revendications ci-dessus, la base de suspension (2) étant fixée à un boîtier de l'installation de granulation, notamment un boîtier d'armoire de commande ou un boîtier de groupe auxiliaire, ou réalisée d'un seul tenant avec ledit boîtier.

5. Installation de granulation conforme à l'une des revendications ci-dessus, le granulateur (5) consistant en un granulateur immergé ou un granulateur à réfection à sec.

6. Installation de granulation conforme à l'une des revendications ci-dessus, le granulateur (5) comprenant une unité de plaque perforée et une unité de tête de lame couplées de manière détachable et suspendues séparément au rail porteur (3).

7. Installation de granulation conforme à l'une des revendications ci-dessus, comprenant également au moins un système d'extrusion.
